# EUROPÄISCHE PATENTSCHRIFT

(11) **EP 1 281 619 B1**
(45) Veröffentlichungstag und Bekanntmachung des Hinweises auf die Patenterteilung: **16.06.2004**
(21) Anmeldenummer: 02010793.4
(22) Anmeldetag: 15.05.2002
(51) Int. Cl.: B65B 35/06, B65G 47/14

(54) **Vorrichtung zum Sortieren und zum Weitertransport von Schüttgut**
Apparatus for sorting and conveying bulk material
Dispositif pour trier et transporter des matériaux en vrac

(30) Priorität: 02.08.2001 DE 10137843
(43) Veröffentlichungstag der Anmeldung: 05.02.2003
(60) Teilanmeldung: 04004628.6
(73) Patentinhaber: UHLMANN PAC-SYSTEME GmbH & Co. KG, 88471 Laupheim (DE)
(72) Erfinder: Gertitschke, Detlev, Dipl.-Ing., 88471 Laupheim (DE); Heim, Ralf, 89194 Schnürpflingen (DE); Pöhler, Hans-Martin, 89150 Laichingen (DE); Matzenmüller, Jürgen, 88416 Bellamont (DE); Zoller, Bernd, 88471 Laupheim (DE); Jans, Erich, 88483 Burgrieden-Roth (DE); Litke, Harald, 88480 Achstetten (DE)
(74) Vertreter: Hentrich, Swen Dipl.-Phys. Dr.

(56) Entgegenhaltungen:
- WO-A-00/07881
- US-A- 4 682 683

## Beschreibung

Die Erfindung betrifft eine Vorrichtung zum Sortieren und zum Weitertransport von in einem Vorratsbehälter gelagertem Schüttgut wie Tabletten, Kapseln, Dragees oder dergl., insbesondere von aus schindelnden Einzelteilen gebildetem Schüttgut, mit einem dem Vorratsgefäß in Transportrichtung nachgeordneten Trichter, der mit der Trichtermündung in einen Speicherkanal mündet und dessen eine Trichterseitenwand an der Trichtermündung durch eine erste, rotierend antreibbare Scheibe gebildet ist.

Derartige Vorrichtungen sind in der Praxis bekannt und beispielsweise in der WO 00/07881 beschrieben. Diese Vorrichtungen werden dazu genutzt, in einem Vorratsbehälter gelagertes Schüttgut einzeln und gezielt zu verpacken, also beispielsweise in Tablettenform vorliegende Medikamente aus dem Vorratsbehälter zu entnehmen und in die Näpfe der Blisterbahn zu überführen. Wesentlich ist dabei neben der Leistungsfähigkeit der Vorrichtung, also der Anzahl der Einzelteile des Schüttgutes, die pro Minute aus dem Vorratsbehälter entnommen und in die Näpfe der Blisterbahn übergeben werden können, auch ein störungsfreier zuverlässiger Betrieb, der nicht durch die Form der Einzelteile beeinträchtigt werden soll. Bei bisher bekannten Vorrichtungen ist es aber problematisch, schindelnde Einzelteile zu verarbeiten, also Einzelteile, die eine im wesentlichen bikonvexe Gestalt haben, die es ermöglicht, daß die Einzelteile in den Transportbahnen und insbesondere im Speicherkanal der bekannten Vorrichtung sich teilweise überlappen, ablagern und durch die dabei auftretende Keilwirkung einen Einzelteilstau verursachen, der eine Produktionsstörung darstellt und entweder aufwendig beseitigt werden muß oder zu seiner Vermeidung eine geringe Arbeitsgeschwindigkeit der bekannten Vorrichtung erfordert.

Die US 4 682 683 zeigt eine Vorrichtung zur Orientierung und Drehung von Kapseln, die gezielt in Aufnahmetaschen einer sich drehenden Scheibe platziert werden, wobei die Aufnahmetaschen derart gestaltet sind, daß die Kapseln bei der Umdrehung der Scheibe durch Anströmen von Luft sich drehen können wenn die Abstützung infolge einer Ausbuchtung des Scheibengehäuses unterbleibt. Für das ordnungsgemäße Funktionieren dieser Vorrichtung ist ein Einzeltransport der Kapseln zwingend erforderlich, so daß dieser Vorrichtung sowohl ein Trichter als auch ein Speicherkanal fehlt, die keinen geeigneten Einzeltransport zulassen.

Der Erfindung liegt daher die Aufgabe zugrunde, eine Vorrichtung der eingangs genannten Art so auszubilden, daß die Leistungsfähigkeit gesteigert und die Anfälligkeit für einen durch die Form der Einzelteile verursachten Stau vermindert wird.

Diese Aufgabe wird nach der Erfindung bei einer Vorrichtung der eingangs genannten Art dadurch gelöst, daß die erste Scheibe auf ihrer Umfangsfläche gleichmäßig über den Umfang verteilt angeordnete Vertiefungen aufweist und eine der Seitenwände des Speicherkanals durch die Umfangsfläche der ersten Scheibe gebildet ist.

Diese Erfindung bietet den Vorteil, daß eine geordnete Übergabe der Einzelteile aus dem Trichter in den Speicherkanal erfolgt, wobei auch innerhalb des Speicherkanals aufgrund der im Umfang der ersten Scheibe angeordneten Vertiefungen eine definierte Lage und Position der Einzelteile relativ zueinander erhalten bleibt. Die Einzelteile erhalten dadurch keine Möglichkeit, sich zu überlappen und zu verkeilen.

Im Rahmen der Erfindung ist dabei bevorzugt, wenn die durch die erste Scheibe gebildete Teillänge der Seitenwand des Speicherkanals unmittelbar an die Trichtermündung anschließt. Bei dieser Ausführungsform wird prophylaktisch bereits am Beginn des Speicherkanals eine Keilbildung der Einzelteile unterbunden und nicht erst im weiteren Verlauf des Speicherkanals die korrekte Anordnung der Einzelteile relativ zueinander kontrolliert und gegebenenfalls wieder hergestellt.

Eine ganz besonders bevorzugte Ausführungsform der Erfindung ist dadurch gekennzeichnet, daß die erste Scheibe um eine im wesentlichen horizontale Achse der durch die Schwerkraft bestimmten Transportrichtung der Einzelteile an der Trichtermündung mit ihrer Umfangsfläche entgegenlaufend rotierend antreibbar ist. Bei dieser Ausführungsform wirkt die erste Scheibe der Schwerkraft entgegen, so daß an die Vertiefungen angelagerte Einzelteile entgegen ihrer Transportrichtung angehoben werden, was zum einen für eine permanente Unruhe der Einzelteile sorgt und insoweit schon einer Keilbildung entgegenwirkt, zum anderen aber auch bei einer bereits erfolgten anfänglichen Keilbildung ein daran beteiligtes Einzelteil nach oben aus diesem Keil wieder entfernt wird, so daß Stauungen auch schnell wieder aufgelöst werden. Mit diesem zusätzlichen Merkmal ist nochmals eine deutliche Leistungssteigerung verbunden.

Als zweckmäßig hat es sich erwiesen, wenn die Vertiefungen als ein in Umfangsrichtung verlaufendes Wellenprofil gestaltet sind. Bei dieser Gestaltung sind Kanten und Spitzen an der Umfangsfläche der ersten Scheibe vermieden, was eine schonende Behandlung der Einzelteile bewirkt, denen Gleitflächen bereitgestellt sind, an denen diese in die Vertiefungen hineingleiten können.

Vorgesehen ist weiterhin, daß Amplitude und Wellenlänge des Wellenprofils an die Form der Einzelteile angepaßt werden können, da so eine formschlüssige Aufnahme der Einzelteile in die Vertiefungen möglich ist, dadurch eine gleichmäßige Kraftübertragung erfolgt und die Zuverlässigkeit der Vorrichtung verbessert wird, auch wenn dadurch die erste Scheibe als Formatteil ausgestaltet ist, das bei einer Änderung der Außenabmessungen der Einzelteile ausgewechselt werden muß.

Die vorstehend genannten Vorteile werden weiterhin gestärkt, wenn in der Umfangsfläche der ersten Scheibe eine in Umfangsrichtung verlaufende, an die Querschnittsgestalt der Einzelteile ausgebildete Nut ausgebildet ist, durch die inbesondere bei schindelnden Einzelteilen das Ausmaß der Krümmung in Querrichtung berücksichtigt werden kann.

Eine im Rahmen der Erfindung weiterhin bevorzugte Ausführungsform ist dadurch gekennzeichnet, daß an der Trichtermündung die Trichterrückwand durch eine zweite Scheibe gebildet ist, die im wesentlichen parallel zur ersten Scheibe angeordnet und rotierend antreibbar gelagert ist. Diese Scheibe unterstützt die erste Scheibe dabei, in dem vor der Trichtermündung anstehenden Schüttgut eine permanente Unruhe zu erzeugen, die einer Verklumpung entgegenwirkt, wobei es im Sinne eines einfachen konstruktiven Aufbaus günstig ist, wenn die erste Scheibe und die zweite Scheibe koaxial angeordnet sind.

Günstig ist weiterhin, wenn die zweite Scheibe in der zu der ersten Scheibe gleichen Drehrichtung antreibbar ist, da so nicht lediglich die Unruhe innerhalb des Schüttgutes durch die zweite Scheibe verstärkt wird, sondern die erste Scheibe beim Anheben der Einzelteile entgegen der Transportrichtung unterstützt wird.

Weitere Maßnahmen zur Beibehaltung eines einfachen konstruktiven Aufbaus der Vorrichtung sind dadurch gegeben, daß die erste Scheibe und die zweite Scheibe mit gleicher Winkelgeschwindigkeit antreibbar sind, daß die erste Scheibe und die zweite Scheibe auf einer gemeinsamen Antriebswelle angeordnet sind, wobei sich dann sogar die Möglichkeit bietet, daß die erste Scheibe und die zweite Scheibe einstückig ausgebildet sind.

Einem platzsparenden Aufbau der Vorrichtung dient, daß die Trichterrückwand in der durch die zweite Scheibe definierten Ebene eine die zweite Scheibe in einer Öffnung aufnehmende Platte aufweist.

Als günstig hat es sich dann erwiesen, wenn auf der Platte auf der dem Vorratsbehälter zugewandten Seite längsverschiebbare Leisten angeordnet ist, die im Sinne einer Rüttelschiene für Unruhe des Schüttgutes im Vorratsbehälter sorgen und den Übergang des Schüttgutes aus dem Vorratsbehälter in den Trichter fördern.

Die absolute Leistungsfähigkeit der Vorrichtung läßt sich dadurch deutlich steigern, daß deren Eignung zu einem modularen Aufbau ausgenutzt wird, daß also die erste Scheibe eine die Anordnung mehrerer in Achsrichtung paralleler, in Umfangsrichtung verlaufende Vertiefungen ermöglichende Dicke aufweist, und daß die benachbarten Speicherkanäle durch Stege getrennt sind.

Alternativ besteht gleichfalls die Möglichkeit, daß die durch den Vorratsbehälter, den Trichter mit der ersten Scheibe und dem Speicherkanal gebildete Baueinheit zu mehreren vorgesehen ist in einer linearen Anordnung.

Eine kompakte Bauweise ergibt sich dann dadurch, daß in der linearen Anordnung der Baueinheiten die Trichtervorderwand des einen Trichters gebildet ist durch die Trichterrückwand des benachbarten Trichters. Alternativ besteht dabei auch die Möglichkeit, daß mit den linearen Baueinheiten die Trichtervorderwand durch eine feststehende Wand gebildet ist.

Um die erste Scheibe problemlos in die Trichterseitenwand integrieren zu können, ist vorgesehen, daß die eine Trichterseitenwand, der die erste Scheibe zugeordnet ist, einen Seitenwandträger mit einer Ausnehmung für die erste Scheibe aufweist.

Vorteilhaft ist dann, wenn in dem Seitenwandträger zumindest der Anfang des Speicherkanals ausgebildet ist, insbesondere wenn dann der Speicherkanal den Seitenwandträger in zwei Teile teilt, die relativ zueinander zur Anpassung des Speicherkanals an die Größe der Einzelteile verstellbar sind. Dies bietet den zusätzlichen Vorteil, daß bei lagerichtig sukzessive in den Speicherkanal eingeführten Einzelteilen die Gefahr drastisch reduziert ist, daß es nachfolgend noch zu einer Keilbildung kommen kann.

Um den konstruktiven Aufwand gering und die Anzahl der beweglichen Teile klein zu halten, ist weiterhin vorgesehen, daß der die Aufnehmung aufweisende Teil des Seitenwandträgers starr und der andere Teil des Seitenwandträgers in der durch die erste Scheibe ausgezeichneten Ebene verstellbar gelagert ist.

Einer Klumpenbildung der Einzelteile in der Trichtermündung wirkt auch entgegen, wenn in der Trichtermündung der ersten Scheibe gegenüberliegend eine rotierend antreibbare dritte Scheibe angeordnet ist. Günstig ist es dabei, wenn der Drehsinn der dritten Scheibe dem Drehsinn der ersten Scheibe entspricht, da so eine Anlagerung der Einzelteile an den Umfang der ersten Scheibe am Eingang der Trichtermündung unterstützt wird.

Um diesen Effekt zu erzielen, ist es ausreichend, wenn der Durchmesser der dritten Scheibe um mindestens den Faktur 5 kleiner als der Durchmesser der ersten Scheibe ist.

Es hat sich gezeigt, daß die Zuverlässigkeit der Vorrichtung nochmals gesteigert wird, wenn an der Trichtermündung eine Eintrittsöffnung für einen Gasstrom, insbesondere Luftstrom in den Speicherkanal ausgebildet ist. Dieser Gasstrom unterstützt den Transport der Einzelteile durch den Speicherkanal in Transportrichtung, so daß im Speicherkanal ein gleichmäßiger Einzelteilstrom erreicht wird, dem die Möglichkeit fehlt, daß nachfolgende Einzelteile voranlaufende Einzelteile einholen und im Speicherkanal verklemmen.

Eine zusätzliche Verstärkung dieses Effektes ist dadurch möglich, daß an den Speicherkanal an dem der Trichtermündung abgewandten Ende eine Unterdruckquelle angeschlossen ist.

Besonders bevorzugt im Rahmen der Erfindung ist, daß die der ersten Scheibe gegenüberliegende Trichterseitenwand vertikal orientiert ist. Bei dieser Gestaltung ergibt sich eine enge Trichtermündung, in der die Anzahl der Einzelteile, die nebeneinander zur Anlage kommen können, sehr stark begrenzt ist, so daß mögliche Keilbildungen auf wenige Einzelteile, in der Regel auf 2 Einzelteile, begrenzt sind, so daß die Entfernung eines Einzelteils durch die erste Scheibe ausreichend ist, um den Keil und die dadurch verursachte Stauung aufzulösen.

Alternativ besteht auch die Möglichkeit, daß beide Trichterseiten geneigt zur Vertikalen verlaufen, wobei es vorteilhaft ist, wenn die beiden Trichterseitenwände einen Winkel größer als 90° miteinander einschließen. Mit dieser Ausführungsform wird einer Keilbildung dadurch entgegengewirkt, daß die Einzelteile sich bevorzugt flachliegend der Trichtermündung nähern und so nicht die zur Keilbildung erforderliche Orientierung aufweisen. Dieser Effekt wird noch dadurch verstärkt, daß die der ersten Scheibe gegenüberliegende Trichterseitenwand an der Trichtermündung von der ersten Scheibe in einem Bogen weggeführt ist. Dabei ist vorgesehen, daß der Umkehrpunkt der Krümmung der der ersten Scheibe gegenüberliegenden Trichterseitenwand sich oberhalb der Achse der ersten Scheibe befindet, um so sicherzustellen, daß die wirksame Umfangsfläche der ersten Scheibe nicht durch eine Verkürzung des Speicherkanals reduziert wird.

Für eine Vorsortierung der Einzelteile ist vorgesehen, daß oberhalb des Trichters auf der dem Vorratsbehälter zugewandten Seite Leisten mit Durchgangsöffnungen angeordnet sind, die in Längsrichtung verschiebbar gelagert sind und den Boden des Vorratsgefäßes bilden.

Eine weitere bevorzugte Ausführungsform der Erfindung ist dadurch gekennzeichnet, daß der abwärts gerichtete Verlauf des Speicherkanals dem Umfang der ersten Scheibe folgt.

Im folgenden wird die Erfindung an in der Zeichnung dargestellen Ausführungsbeispielen näher erläutert; es zeigen:
- Fig. 1: eine perspektivische, schematische Darstellung der erfindungsgemäßen Vorrichtung mit Fülltrichter und Vibrationsrinne,
- Fig. 2: eine schematische, perspektivische Darstellung der Vorrichtung aus Fig. 1 mit in den Trichter eingefülltem Schüttgut,
- Fig. 3: eine Seitenansicht und eine Vorderansicht eines das Schüttgut bildenden Einzelteils,
- Fig. 4: eine schematische Darstellung der Vorgänge beim Einführen der Einzelteile aus dem Vorratsbehälter in zwei parallel angeordnete Trichter,
- Fig. 5: eine Seitenansicht von 3 schindelnden Einzelteilen unterschiedlicher Dicke,
- Fig. 6: einen Längsschnitt durch die erste Scheibe,
- Fig. 7: in einer Vorderansicht die schematische Darstellung der einen Trichterseitenwand und einen Teil einer Seitenwand des Speicherkanals bildenden ersten Scheibe,
- Fig. 8: den Schnitt VIII-VIII aus Figur 7,
- Fig. 9: eine der Figur 7 entsprechende Darstellung einer weiteren Ausführungsform,
- Fig. 10: den Schnitt X-X aus Figur 9,
- Fig. 11: eine der Figur 7 entsprechende Darstellung einer weiteren Ausführungsform, und
- Fig. 12: den Schnitt XII-XII aus Figur 11.

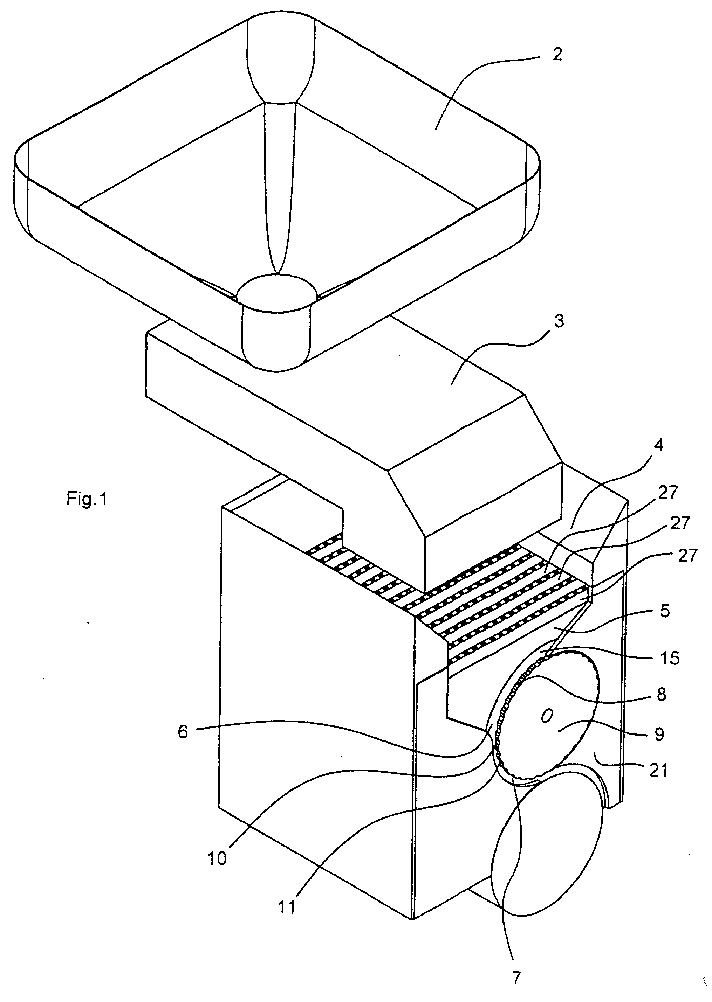

In Figur 1 ist eine Vorrichtung gezeigt, die zum Sortieren und zum Weitertransport von Schüttgut 1 dient, das beispielsweise durch Tabletten, Kapseln, Dragees oder dergleichen gebildet ist. Die Vorrichtung fungiert als Koppelglied, um das unsortiert und ungeordnet angelieferte Schüttgut 1 einzeln verpacken zu können, beispielsweise in selber in der Zeichnung nicht dargestellte Näpfe einer Blisterbahn. Dazu wird das Schüttgut 1 über einen Sammelbehälter 2 und einer daran angeschlossenen Vibrationsrinne 3 mit Fülltrichter einem Vorratsbehälter 4 der Vorrichtung zugeführt, dem in Transportrichtung ein Trichter 5 nachgeordnet ist. Der Trichter 5 mündet mit der Trichtermündung 6 in einen Speicherkanal 7, wobei eine Trichterseitenwand 8 an der Trichtermündung 6 durch eine erste Scheibe 9 gebildet ist.

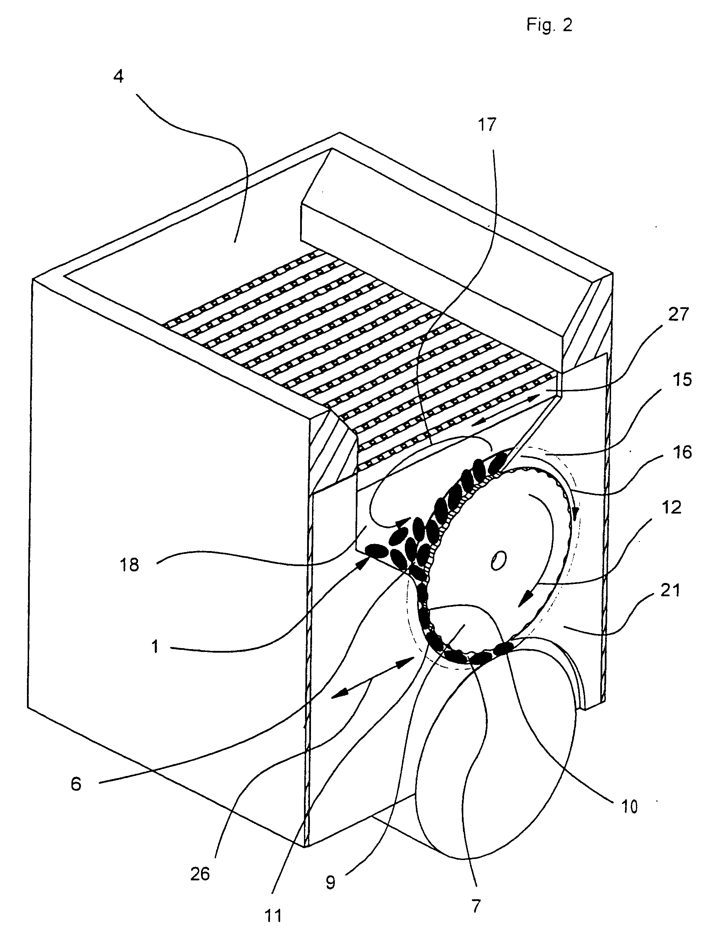

Die erste Scheibe 9 weist auf ihrer Umfangsfläche gleichmäßig über den Umfang verteilt angeordnete Vertiefungen 10 auf und bildet mit ihrer Umfangsfläche neben einem Teil der Trichterseitenwand 8 und auf der Länge des Speicherkanals 7 auch eine von dessen Seitenwänden 11 (Fig. 2).

Die durch die erste Scheibe 9 gebildete Teillänge der Seitenwand 11 des Speicherkanals 7 schließt dabei in den in der Zeichnung dargestellten Ausführungsbeispielen unmittelbar an die Trichtermündung 6 an, wobei die erste Scheibe 9 rotierend antreibbar gelagert ist, und zwar mit einer Drehrichtung, in der die Umfangsfläche der durch die Schwerkraft bestimmten Transportrichtung der Einzelteile im Speicherkanal entgegenläuft, wie durch den Pfeil 12 angedeutet.

Die in der Umfangsfläche der ersten Scheibe 9 ausgebildeten Vertiefungen 10 sind als ein Wellenprofil gestaltet, dessen Amplitude und Wellenlänge an die Form der Einzelteile 13 angepaßt ist, so daß diese Einzelteile 13 in einem Formschluß in diese Vertiefungen 10 aufgenommen werden können, wobei eine gute Passung durch eine in der Umfangsfläche der ersten Scheibe 9 in Umfangsrichtung verlaufende, an die Querschnittsgestalt der Einzelteile 13 angepaßte Nut 14 gefördert ist.

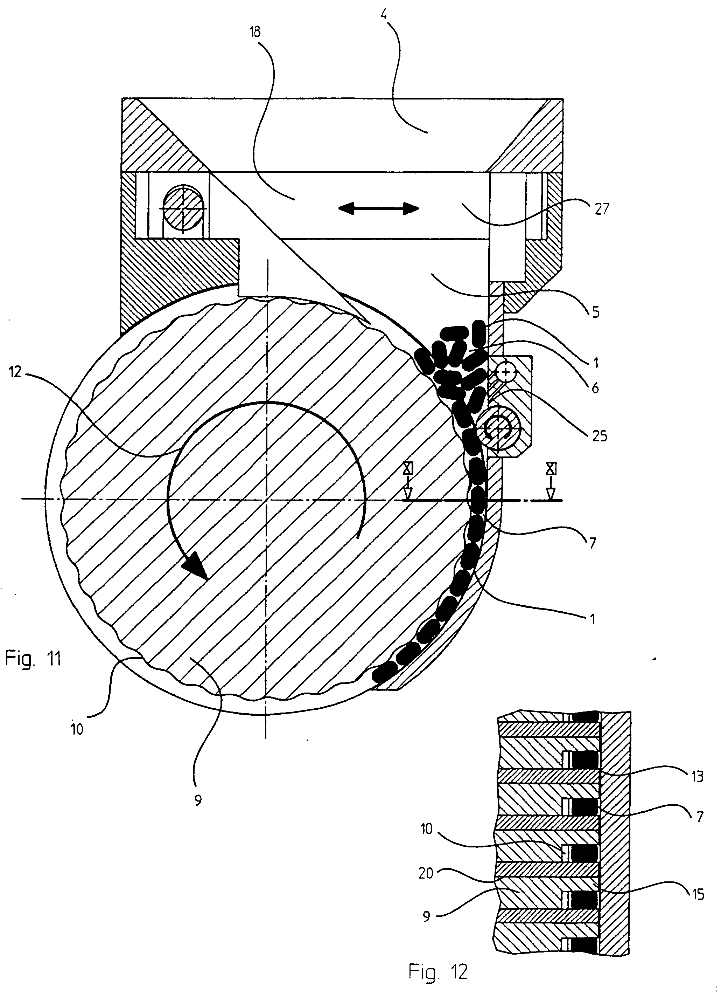

Die Trichterrückwand ist an der Trichtermündung 6 durch eine zweite Scheibe 15 gebildet, die in den gezeigten Ausführungsbeispielen parallel zur ersten Scheibe 9 angeordnet und rotierend antreibbar gelagert ist. Bei den in der Zeichnung in den Figuren 1 und 2 sowie 9 und 12 dargestellten Ausführungsbeispielen sind die erste Scheibe 9 und die zweite Scheibe 15 koaxial zueinander angeordnet, wobei die zweite Scheibe 15 in der zu der ersten Scheibe 9 gleichen Drehrichtung antreibbar ist (Pfeil 16). Die Rotation der ersten Scheibe 9 und der zweiten Scheibe 15 führt dazu, daß die in dem Trichter 5 befindlichen Einzelteile 13 in stetiger Unruhe gehalten werden, wobei sich ein Teilefluß (Pfeil 17) einstellt, da die Einzelteile 13 entgegen der Transportrichtung durch die erste Scheibe 9 und die zweite Scheibe 15 angehoben werden und unter der Wirkung der Schwerkraft wieder zurückfallen.

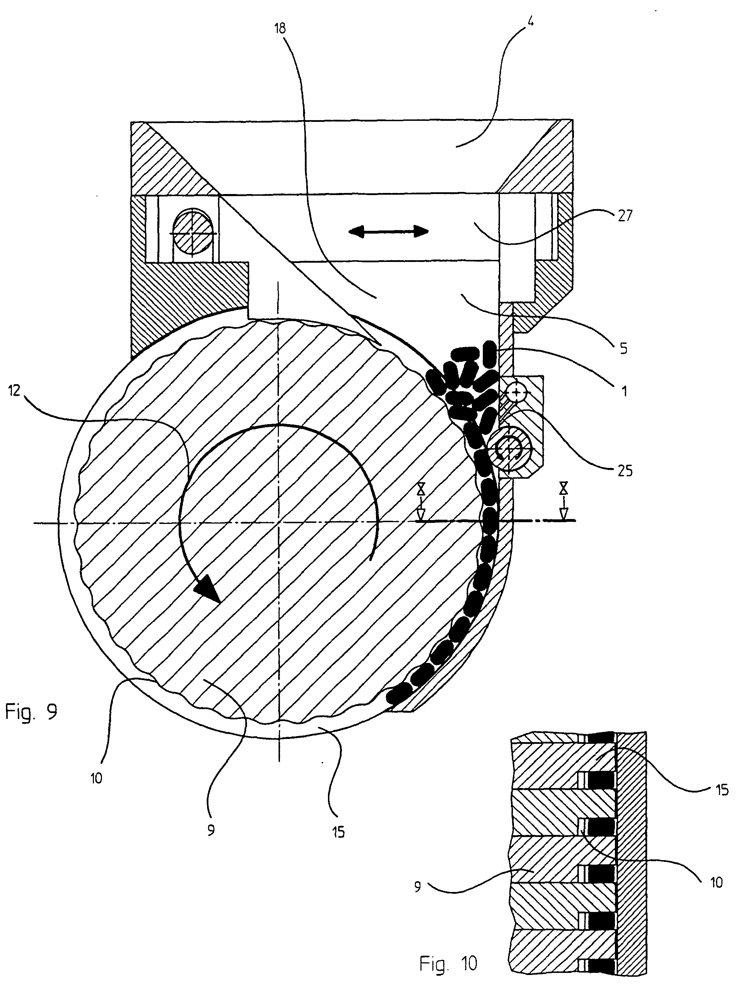

Die erste Scheibe 9 und die zweite Scheibe 15 können mit gleicher Winkelgeschwindigkeit angetrieben werden, wobei sich dann die in den Figuren 9 und 10 dargestellte Ausführungsform anbietet, bei der die erste Scheibe 9 und die zweite Scheibe 15 einstückig ausgebildet sind und durch eine gemeinsame Antriebswelle angetrieben werden.

In Fig. 1 und 2 ist weiterhin zu erkennen, daß die Trichterrückwand in der durch die zweite Scheibe 15 definierten Ebene eine die zweite Scheibe in einer Öffnung aufnehmenden Platte 18 aufweist. Fig. 2 zeigt auch, daß die durch den Vorratsbehälter 4, den Trichter 5 mit der ersten Scheibe 9 und dem Speicherkanal 7 gebildete Baueinheit mehrfach in einer linearen Anordnung vorgesehen ist, wodurch sich aufgrund der modularen Bauweise der Vorrichtung eine an die konkreten Erfordernisse anpaßbare Leistungsfähigkeit ergibt.

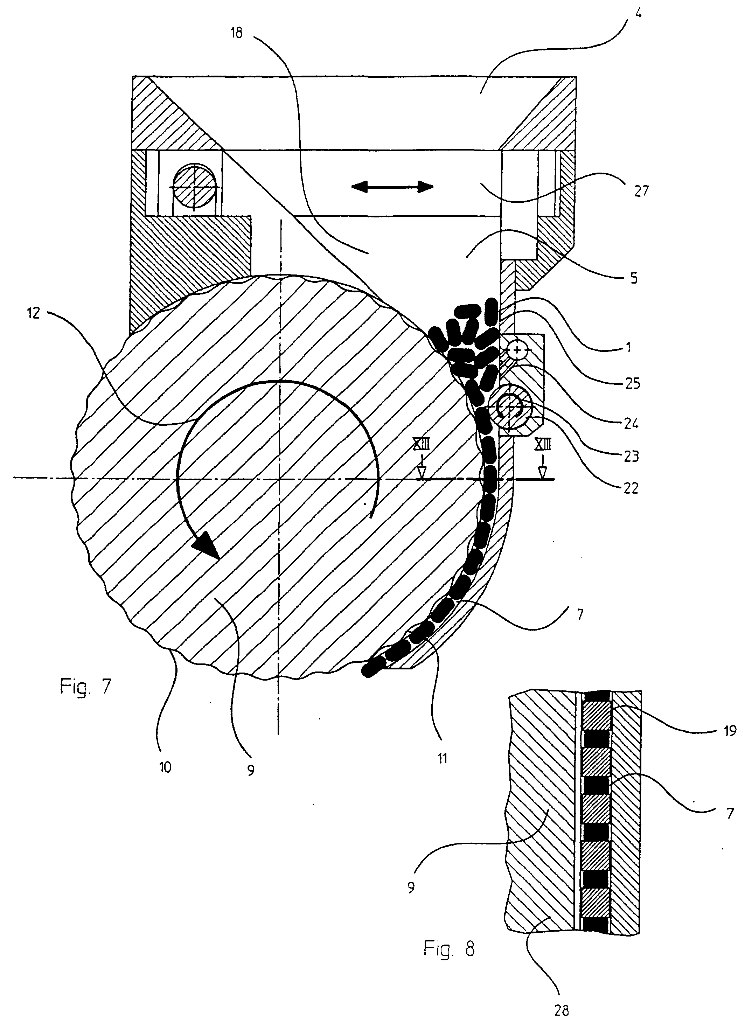

Alternativ ist auch die Realisierung der in den Figuren 7 und 8 gezeigten Ausführungsform möglich, bei der die erste Scheibe 9 eine die Anordnung mehrerer in Achsrichtung paralleler, in Umfangsrichtung verlaufender Vertiefungen 10 ermöglichende Dicke aufweist, wobei dann zur Ausformung der Speicherkanäle Stege 19 vorgesehen sind, deren Funktion bei der in Fig. 9 und 10 gezeigten Ausführungsform durch die zweiten Scheiben 15 übernommen ist.

Eine platzsparende Bauweise ergibt sich, da in der linearen Anordnung der Baueinheiten die Trichtervorderwand des einen Trichters 5 gebildet ist durch die Trichterrückwand des benachbarten Trichters 5, insbesondere der Platte 18 mit der zweiten Scheibe 15, wobei es alternativ aber gleichfalls möglich ist, daß in der linearen Anordnung der Baueinheiten die Trichtervorderwand durch eine feststehende Wand 20 gebildet ist.

Wie wiederum in Fig. 2 dargestellt ist, weist die eine Trichterseitenwand 8, der die erste Scheibe 9 zugeordnet ist, einen Seitenwandträger 21 mit einer Ausnehmung für die erste Scheibe 9 auf, wobei in dem Seitenwandträger 21 zumindest eine Fortführung des Speicherkanals 7 ausgebildet ist, der außerhalb des Seitenwandträgers 21 in einer anderen Vorrichtung weitergeführt sein kann.

Der Speicherkanal 7 teilt den Seitenwandträger 21 in zwei Teile, die relativ zueinander zur Anpassung der Weite des Speicherkanals 7 an die Größe der Einzelteile verstellbar ist. Dabei ist der die Ausnehmung aufweisende Teil des Seitenwandträgers 21 starr und der andere Teil des Seitenwandträgers 21 in der durch die erste Scheibe 9 ausgezeichneten Ebene verstellbar gelagert (Pfeil 26).

Bei den in den Figuren 7 bis 12 dargestellten Ausführungsbeispielen ist in der Trichtermündung 6 der ersten Scheibe 9 gegenüberliegend eine rotierend antreibbare dritte Scheibe 22 angeordnet, deren Drehsinn (Pfeil 23) dem Drehsinn der ersten Scheibe 9 entspricht, die einen Durchmesser aufweist, der mindestens um den Faktor 5 gößer als der Durchmesser der dritten Scheibe 22 ist. Bei diesen Ausführungsformen ist oberhalb der dritten Scheibe 22 an der Trichtermündung 6 eine Eintrittsöffnung 24 für einen Gasstrom, insbesondere Luftstrom in den Speicherkanal 7 ausgebildet, wobei an den Speicherkanal 7, an dem der Trichtermündung 6 abgewandten Ende eine Unterdruckquelle angeschlossen ist, so daß insgesamt der unter der Wirkung der Schwerkraft stattfindende Transport der Einzelteile 13 im Speicherkanal 7 durch den Gasstrom unterstützt wird.

Wiederum bei den Ausführungsformen in den Figuren 7 bis 12 ist die der ersten Scheibe 9 gegenüberliegende Trichterseitenwand 25 vertikal orientiert, so daß sich eine enge Trichtermündung 6 ergibt, in der die Einzelteile 13 nicht in großer Anzahl nebeneinander Platz finden.

Demgegenüber ist in den Figuren 1 und 2 ein Ausführungsbeispiel gezeigt, bei der beide Trichterseitenwände 8,25 geneigt zur Vertikalen verlaufen und einen Winkel miteinander einschließen, der größer als 90 ° ist. Dabei ist weiterhin die der ersten Scheibe 9 gegenüberliegende Trichterseitenwand 25 an der Trichtermündung 6 von der ersten Scheibe 9 in einem zum Vorratsbehälter 4 gerichteten Bogen weggeführt, wobei der Umkehrpunkt der Krümmung der der ersten Scheibe 9 gegenüberliegenden Trichterseitenwand 25 sich oberhalb der Achse der ersten Scheibe 9 befindet.

Oberhalb des Trichters 6 sind auf der dem Vorratsbehälter 4 zugewandten Seite Leisten 27 mit Durchgangsöffnungen angeordnet, die in Längsrichtung verschiebbar gelagert sind und den Boden des Vorratsgefäßes 4 bilden. Die freien Enden der Leisten 27 sind dabei zumindest einseitig angefast, um den Eintritt der Einzelteile 13 zwischen den Leisten 27 in den Trichter 6 mit einer ersten Vorsortierung zu fördern.

Bei allen in der Zeichnung dargestellten Ausführungsbeispielen ist ersichtlich, daß der Verlauf des Speicherkanals 7 dem Umfang der ersten Scheibe 9 folgt, zumindest solange, wie die zur Ausnutzung der Schwerkraft erforderliche abwärts gerichtete Komponente gewahrt werden kann.

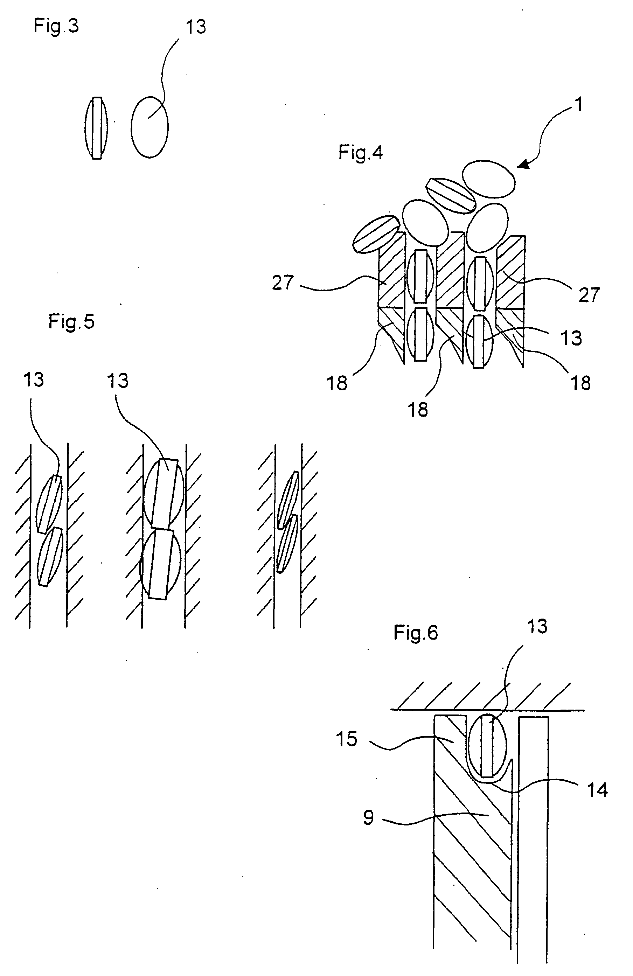

Im folgenden soll die Funktionsweise der erfindungsgemäßen Vorrichtung geschildert werden, die ihre besondere Leistungsfähigkeit bei dem Sortieren, Weitertransportieren und Vereinzeln von schindelnden Einzelteilen 13 zeigt, also Einzelteile, die eine im wesentlichen bikonvexe Oberfläche gemäß Fig. 3 aufweisen und sich daher gegenseitig überlagern und in engen Transportwegen verkeilen können (Fig. 3,5). Sofern eine besonders hohe Leistungsfähigkeit der Vorrichtung gewünscht ist, wird in diese die erste Scheibe 9 eingesetzt, deren in Umfangsrichtung ausgebildeten Vertiefungen 10 an die Abmessungen der Einzelteile 13 angepaßt sind, die erste Scheibe 9 also ein Formatteil darstellt, das dann zweckmäßigerweise als Walze 28 ausgebildet ist (Fig. 8), weil so der Wechsel vereinfacht ist.

Dieser Wechsel ist in der Regel aber nicht erforderlich, da auch ohne eine entsprechende Anpassung eine hohe Zuverlässigkeit der Vorrichtung gegeben ist. Dies wird dadurch erreicht, daß der Speicherkanal 7 vor Betriebsbeginn in seiner Breite an die Abmessungen der Einzelteile 13 angepaßt wird, indem der Seitenwandträger 21 entsprechend verstellt wird. Die erste Scheibe 9 sowie die zweite Scheibe 15 werden in Rotation versetzt, während die auf der Platte 18 angeordneten längsverschieblichen Leisten 27 in schwingende Bewegung versetzt werden. In diesem Betriebszustand ist es möglich, das Schüttgut 1 mit seinen Einzelteilen 13 durch die Vibrationsrinnen mit Fülltrichter in den Vorratsbehälter 4 zu füllen, aus dem die Einzelteile 13 durch die Leisten 27 vorsortiert in den Trichter 5 transportiert werden. In diesem Trichter 5 fallen die Einzelteile zur Trichtermündung 6, wobei die Einzelteile 13, die Kontakt mit den Vertiefungen 10 der Umfangsfläche der ersten Scheibe 9 sowie mit der Seitenfläche der zweiten Scheibe 15 erhalten, entgegen der Transportrichtung angehoben werden, was zu einem durch den Pfeil 17 symbolisierten Effekt führt, der die Einzelteile 13 in stetiger Unruhe hält und der Ausbildung von Verkeilungen entgegenwirkt. Die Einzelteile 13, bei denen die Reibung bzw. der Formschluß mit der ersten Scheibe 9 für ein Anheben nicht ausreicht, treten in den Speicherkanal 7 ein und durchqueren diesen unter der Wirkung der Schwerkraft, wobei die in der ersten Scheibe 9 ausgebildeten Vertiefungen 10 verhindern, daß in dem Speicherkanal 7 sich mehrere schindelnde Einzelteile 13 überlappen. Sollten sich doch unter ungünstigen Bedingungen Überlappungen ausbilden, die zu einem Verkeilen innerhalb des Speicherkanals 7 und der daraus resultierenden Rückstauung der Einzelteile 13 im Trichter 5 führen könnten, werden diese Überlappungen durch die rotierende erste Scheibe 9 und zweite Scheibe 15 wieder aufgelöst. Der Transport der Einzelteile 13 durch den Speicherkanal 7 wird weiterhin dadurch gefördert, daß an der Trichtermündung der Gasstrom in Transportrichtung in den Speicherkanal 7 eingeblasen wird und zusätzlich an dem gegenüberliegenden Ende eine Verbindung zu der Vakuumquelle besteht.

Da sowohl in der Trichtermündung 6 als auch im Speicherkanal 7 eine Klumpenbildung, Keilwirkung oder dergleichen von Einzelteilen 13 verhindert ist, stehen am Ende des Speicherkanals 7 die Einzelteile 13 des Schüttgutes 1 auch vereinzelt zur weiteren Verarbeitung, insbesondere zum Abpacken zur Verfügung.

## Patentansprüche

1. Vorrichtung zum Sortieren und zum Weitertransport von in einem Vorratsbehälter (4) gelagertem Schüttgut (1) wie Tabletten, Kapseln, Dragees oder dergl., insbesondere von aus schindelnden Einzelteilen (13) gebildetem Schüttgut (1), mit einem dem Vorratsgefäß (4) in Transportrichtung nachgeordneten Trichter (5), der mit der Trichtermündung (6) in einen Speicherkanal (7) mündet und dessen eine Trichterseitenwand (8) an der Trichtermündung (6) durch eine erste, rotierend antreibbare Scheibe (9) gebildet ist, **dadurch gekennzeichnet, daß** die erste Scheibe (9) auf ihrer Umfangsfläche gleichmäßig über den Umfang verteilt angeordnete Vertiefungen (10) aufweist und eine der Seitenwände (11) des Speicherkanals (7) durch die Umfangsfläche der ersten Scheibe (9) gebildet ist.

2. Vorrichtung nach Anspruch 1, **dadurch gekennzeichnet, daß** die durch die erste Scheibe (9) gebildete Seitenwand (11) des Speicherkanals (7) unmittelbar an die Trichtermündung (6) anschließt.

3. Vorrichtung nach Anspruch 1 oder 2, **dadurch gekennzeichnet, daß** die erste Scheibe (9) um eine im wesentlichen horizontale Achse der durch die Schwerkraft bestimmten Transportrichtung der Einzelteile an der Trichtermündung (6) mit ihrer Umfangsfläche entgegenlaufend rotierend antreibbar ist.

4. Vorrichtung nach einem der Ansprüche 1 bis 3, **dadurch gekennzeichnet, daß** die Vertiefungen (10) als ein in Umfangsrichtung verlaufendes Wellenprofil gestaltet sind.

5. Vorrichtung nach Anspruch 4, **dadurch gekennzeichnet, daß** Amplitude und Wellenlänge des Wellenprofils an die Form der Einzelteile (13) angepaßt ist.

6. Vorrichtung nach einem der Ansprüche 1 bis 5, **dadurch gekennzeichnet, daß** in der Umfangsfläche der ersten Scheibe (9) eine in Umfangsrichtung verlaufende, an die Querschnittsgestalt der Einzelteile (13) angepaßte Nut (14) ausgebildet ist.

7. Vorrichtung nach einem der Ansprüche 1 bis 6, **dadurch gekennzeichnet, daß** an der Trichtermündung (6) die Trichterrückwand durch eine zweite Scheibe (15) gebildet ist, die im wesentlichen parallel zur ersten Scheibe (9) angeordnet und rotierend antreibbar gelagert ist.

8. Vorrichtung nach Anspruch 7, **dadurch gekennzeichnet, daß** die erste Scheibe (9) und die zweite Scheibe (15) koaxial angeordnet sind.

9. Vorrichtung nach Anspruch 7 oder 8, **dadurch gekennzeichnet, daß** die zweite Scheibe (15) in der zu der ersten Scheibe (9) gleichen Drehrichtung antreibbar ist.

10. Vorrichtung nach einem der Ansprüche 7 bis 9, **dadurch gekennzeichnet, daß** die erste Scheibe (9) und die zweite Scheibe (15) mit gleicher Winkelgeschwindigkeit antreibbar sind.

11. Vorrichtung nach einem der Ansprüche 7 bis 10, **dadurch gekennzeichnet, daß** die erste Scheibe (9) und die zweite Scheibe (15) auf einer gemeinsamen Antriebswelle angeordnet sind.

12. Vorrichtung nach einem der Ansprüche 7 bis 11, **dadurch gekennzeichnet, daß** die erste Scheibe (9) und die zweite Scheibe (15) einstückig ausgebildet sind.

13. Vorrichtung nach einem der Ansprüche 7 bis 12, **dadurch gekennzeichnet, daß** die Trichterrückwand in der durch die zweite Scheibe (15) definierten Ebene eine die zweite Scheibe (15) in einer Öffnung aufnehmenden Platte (18) aufweist.

14. Vorrichtung nach Anspruch 13, **dadurch gekennzeichnet, daß** auf der Platte (18), auf der dem Vorratsbehälter (4) zugewandten Seite eine längsverschiebliche Leiste (27) angeordnet ist.

15. Vorrichtung nach einem der Ansprüche 1 bis 14, **dadurch gekennzeichnet, daß** die erste Scheibe (9) eine die Anordnung mehrerer in Achsrichtung paralleler, in Umfangsrichtung verlaufender Vertiefungen (10) ermöglichende Dicke aufweist, und daß die benachbarten Speicherkanäle (7) durch Stege (19) getrennt sind.

16. Vorrichtung nach einem der Ansprüche 1 bis 14, **dadurch gekennzeichnet, daß** die durch den Vorratsbehälter (4), den Trichter (5) mit der der ersten Scheibe (9) und dem Speicherkanal (7) gebildete Baueinheit zu mehreren vorgesehen ist in einer linearen Anordnung.

17. Vorrichtung nach Anspruch 16, **dadurch gekennzeichnet, daß** in der linearen Anordnung der Baueinheiten die Trichtervorderwand des einen Trichters (5) gebildet ist durch die Trichterrückwand des benachbarten Trichters (5).

18. Vorrichtung nach Anspruch 16, **dadurch gekennzeichnet, daß** in der linearen Anordnung der Baueinheiten die Trichtervorderwand durch eine feststehende Wand (20) gebildet ist.

19. Vorrichtung nach einem der Ansprüche 1 bis 18, **dadurch gekennzeichnet, daß** die eine Trichterseitenwand, der die erste Scheibe (9) zugeordnet ist, einen Seitenwandträger (21) mit einer Ausnehmung für die erste Scheibe (9) aufweist.

20. Vorrichtung nach Anspruch 19, **dadurch gekennzeichnet, daß** in dem Seitenwandträger (21) zumindest der Anfang des Speicherkanals (7) ausgebildet ist.

21. Vorrichtung nach Anspruch 20, **dadurch gekennzeichnet, daß** der Speicherkanal (7) den Seitenwandträger (21) in zwei Teile teilt, die relativ zueinander zur Anpassung des Speicherkanals (7) an die Größe der Einzelteile (13) verstellbar sind.

22. Vorrichtung nach Anspruch 21, **dadurch gekennzeichnet, daß** der die Ausnehmung aufweisende Teil des Seitenwandträgers (21) starr und der andere Teil des Seitenwandträgers (21) in der durch die ersten Scheibe (9) ausgezeichneten Ebene verstellbar gelagert ist.

23. Vorrichtung nach einem der Ansprüche 1 bis 22, **dadurch gekennzeichnet, daß** in der Trichtermündung (6) der ersten Scheibe (9) gegenüberliegend eine rotierend antreibbare dritte Scheibe (22) angeordnet ist.

24. Vorrichtung nach Anspruch 23, **dadurch gekennzeichnet, daß** der Drehsinn der dritten Schreibe (22) dem Drehsinn der ersten Scheibe (9) entspricht.

25. Vorrichtung nach Anspruch 23 oder 24, **dadurch gekennzeichnet, daß** der Durchmesser der dritten Scheibe (22) um mindestens den Faktor 5 kleiner als der Durchmesser der ersten Scheibe (9) ist.

26. Vorrichtung nach einem der Ansprüche 1 bis 25, **dadurch gekennzeichnet, daß** an der Trichtermündung (6) eine Eintrittsöffnung (24) für einen Gasstrom, insbesondere Luftstrom in den Speicherkanal (7) ausgebildet ist.

27. Vorrichtung nach einem der Ansprüche 1 bis 26, **dadurch gekennzeichnet, daß** an den Speicherkanal (7) an dem der Trichtermündung (6) abgewandten Ende eine Unterdruckquelle angeschlossen ist.

28. Vorrichtung nach einem der Ansprüche 1 bis 27, **dadurch gekennzeichnet, daß** die der ersten Scheibe (9) gegenüberliegende Trichterseitenwand (25) vertikal orientiert ist.

29. Vorrichtung nach einem der Ansprüche 1 bis 27, **dadurch gekennzeichnet, daß** beide Trichterseitenwände (8,25) geneigt zur Vertikalen verlaufen.

30. Vorrichtung nach Anspruch 29, **dadurch gekennzeichnet, daß** die beiden Trichterseitenwände (8,25) einen Winkel größer als 90° miteinander einschließen.

31. Vorrichtung nach Anspruch 29 oder 30, **dadurch gekennzeichnet, daß** die der ersten Scheibe (9) gegenüberliegende Trichterseitenwand (25) an der Trichtermündung (6) von der ersten Scheibe (9) in einem Bogen weggeführt ist.

32. Vorrichtung nach Anspruch 31, **dadurch gekennzeichnet, daß** der Umkehrpunkt der Krümmung der der ersten Scheibe (9) gegenüberliegenden Trichterseitenwand (25) sich oberhalb der Achse der ersten Scheibe (9) befindet.

33. Vorrichtung nach einem der Ansprüche 1 bis 32, **dadurch gekennzeichnet, daß** oberhalb des Trichters (5) auf der dem Vorratsbehälter (4) zugewandten Seite Leisten (27) mit Durchgangsöffnungen angeordnet sind, die in Längsrichtung verschiebbar gelagert sind und den Boden des Vorratsgefäßes (4) bilden.

34. Vorrichtung nach einem der Ansprüche 1 bis 33, **dadurch gekennzeichnet, daß** der abwärts gerichtete Verlauf des Speicherkanals (7) dem Umfang der ersten Scheibe (9) folgt.

## Claims

1. Apparatus for the sorting and onward transfer of bulk material (1) stored in a storage bin (4) such as tablets, capsules, coated tablets or the like, more particularly bulk material (1) made up of shingle-like individual pieces (13), comprising a hopper (5) which is disposed downstream of the storage container (4) in the direction of travel, opening out by its hopper mouth (6) into a storage channel (7), and one side wall (8) of which is formed at the hopper mouth (6) by a first disc (9) which is adapted to be driven in rotation, **characterised in that** on its peripheral surface the first disc (9) features depressions (10) distributed uniformly around its circumference and one of the side walls (11) of the storage channel (7) is formed by the peripheral surface of the first disc (9).

2. Apparatus according to claim 1, **characterised in that** the storage channel's (7) side wall (11), formed by the first disc (9), is directly contiguous with the hopper mouth (6).

3. Apparatus according to claim 1 or 2, **characterised in that** the first disc (9) is adapted to be driven in rotation, with its circumferential surface travelling in the opposite direction, about a substantially horizontal axis of the direction of travel of the individual pieces at the hopper mouth (6), which direction is determined by gravitational force.

4. Apparatus according to any of claims 1 to 3, **characterised in that** the depressions (10) are configured as an undulating profile extending in a circumferential direction.

5. Apparatus according to claim 4, **characterised in that** the amplitude and wavelength of the undulating profile are adapted to the shape of the individual pieces (13).

6. Apparatus according to any of claims 1 to 5, **characterised in that** configured in the circumferential surface of the first disc (9) is a groove (14), said groove running circumferentially and adapted to the cross-sectional form of the individual pieces (13).

7. Apparatus according to any of claims 1 to 6, **characterised in that** at the hopper mouth (6) the rear wall of the hopper is constituted by a second disc (15) which is arranged substantially parallel to the first disc (9) and is supported so as to allow it to be driven in rotation.

8. Apparatus according to claim 7, **characterised in that** the first disc (9) and the second disc (15) are arranged coaxially.

9. Apparatus according to claim 7 or 8, **characterised in that** the second disc (15) is adapted to be driven in the same direction of rotation as the first disc (9).

10. Apparatus according to any of claims 7 to 9, **characterised in that** the first disc (9) and the second disc (15) are adapted to be driven at the same angular velocity.

11. Apparatus according to any of claims 7 to 10, **characterised in that** the first disc (9) and the second disc (15) are arranged on a common drive shaft.

12. Apparatus according to any of claims 7 to 11, **characterised in that** the first disc (9) and the second disc (15) are of integral construction.

13. Apparatus according to any of claims 7 to 12, **characterised in that** in the plane defined by the second disc (15) the rear wall of the hopper incorporates a plate (18) which accommodates the second disc (15) in an aperture.

14. Apparatus according to claim 13, **characterised in that** arranged on the plate (18), on the side nearest to the storage bin (4), is a longitudinally adjustable lath (27).

15. Apparatus according to any of claims 1 to 14, **characterised by** giving the first disc (9) a thickness that allows the arrangement of a plurality of axially parallel depressions (10) extending in the circumferential direction, and by using lands (19) to separate the adjoining storage channels (7).

16. Apparatus according to any of claims 1 to 14, **characterised by** giving the constructional unit made up of the storage bin (4), the hopper (5) with the first disc (9), and the storage channel (7), a multiple configuration in a linear arrangement.

17. Apparatus according to claim 16, **characterised in that** in the linear arrangement of the constructional units the front wall of one hopper (5) is formed by the rear wall of the adjoining hopper (5).

18. Apparatus according to claim 16, **characterised in that** in the linear arrangement of the constructional units the front wall of the hopper is constituted by a fixed wall (20).

19. Apparatus according to any of claims 1 to 18, **characterised in that** one side wall of the hopper, with which the first disc (9) is operatively associated, incorporates a side wall bracket (21) with a recess for the first disc (9).

20. Apparatus according to claim 19, **characterised in that** configured in the side wall bracket (21) is at least the start of the storage channel (7).

21. Apparatus according to claim 20, **characterised in that** the storage channel (7) divides the side wall bracket (21) into two parts which can be adjusted in relation to one another to adapt the storage channel (7) to the size of the individual pieces (13).

22. Apparatus according to claim 21, **characterised in that** the part of the side wall bracket (21) that incorporates the recess is rigidly mounted and the other part of the side wall bracket (21) is adjustably mounted in the plane distinguished by the first disc (9).

23. Apparatus according to any of claims 1 to 22, **characterised in that** arranged in the hopper mouth (6), situated opposite the first disc (9), is a third disc (22) adapted to be driven in rotation.

24. Apparatus according to claim 23, **characterised in that** the direction of rotation of the third disc (22) is the same as the direction of rotation of the first disc (9).

25. Apparatus according to claim 23 or 24, **characterised in that** the diameter of the third disc (22) is smaller by at least a factor of 5 than the diameter of the first disc (9).

26. Apparatus according to any of claims 1 to 26, **characterised in that** configured at the hopper mouth (6) is an inlet port (24) for a gas stream, more particularly an air stream into the storage channel (7).

27. Apparatus according to any of claims 1 to 26, **characterised in that** connected to the storage channel (7), at the end remote from the hopper mouth (6), is a source of low pressure.

28. Apparatus according to any of claims 1 to 27, **characterised in that** the hopper side wall (25) situated opposite the first disc (9) is vertically aligned.

29. Apparatus according to any of claims 1 to 27, **characterised in that** the two hopper side walls (8, 25) slope at an angle to the vertical.

30. Apparatus according to claim 29, **characterised in that** the two hopper side walls (8, 25) enclose an angle greater than 90° with one another.

31. Apparatus according to claim 29 or 30, **characterised in that** at the hopper mouth (6) the hopper side wall (25) situated opposite the first disc (9) leads away in an arc from the first disc (9).

32. Apparatus according to claim 31, **characterised in that** the cusp point of the curvature of the hopper side wall (25) situated opposite the first disc (9) is located above the axis of the first disc (9).

33. Apparatus according to any of claims 1 to 32, **characterised in that** arranged above the hopper (5), on the side nearest to the storage bin (4), are laths (27) with through-holes, which are mounted so as to be movable in the longitudinal direction and constitute the floor of the storage container (4).

34. Apparatus according to any of claims 1 to 33, **characterised in that** the downwardly directed course of the storage channel (7) follows the circumference of the first disc (9).

## Revendications

1. Dispositif pour trier et transporter un produit en vrac (1) stocké dans un récipient de stockage (4), tel que des comprimés, des gélules, des dragées ou similaires, plus particulièrement un produit en vrac (1) constitué d'éléments individuels (13) formant des éclats, comprenant une trémie (5) disposée en aval du récipient de stockage (4) vu dans la direction de transport, qui avec sa sortie de trémie (6) débouche dans un canal d'accumulation (7) et dont l'une des parois latérales (8) au niveau de la sortie de trémie (6) est formée par une première roue (9) entraînée en rotation, **caractérisé par le fait que** la première roue (9) présente sur sa surface périphérique des cavités (10) uniformément réparties sur la circonférence, et **par le fait qu'**une des parois latérales (11) du canal d'accumulation (7) est formée par la surface périphériques de la première roue (9).

2. Dispositif selon la revendication 1, **caractérisé par le fait que** la paroi latérale (11) du canal d'accumulation (7) formée par la première roue (9) se raccorde directement à la sortie de trémie (6).

3. Dispositif selon la revendication 1 ou 2, **caractérisé par le fait que** la première roue (9) est entraînée en rotation autour d'un axe essentiellement horizontal avec sa surface périphérique tournant dans le sens opposé à la direction de transport des éléments individuels au niveau de la sortie de trémie (6) définie par la force de gravité.

4. Dispositif selon une des revendications 1 à 3, **caractérisé par le fait que** les cavités (10) sont conformées en profil d'ondes s'étendant dans la direction périphérique.

5. Dispositif selon la revendication 4, **caractérisé par le fait que** l'amplitude et la longueur d'onde du profil d'ondes sont adaptées à la forme des éléments individuels (13).

6. Dispositif selon une des revendications 1 à 5, **caractérisé par le fait qu'**une gorge (14) adaptée au profil en section transversale des éléments individuels (13), qui s'étend dans la direction périphérique, est aménagée dans la surface périphérique de la première roue (9).

7. Dispositif selon une des revendications 1 à 6, **caractérisé par le fait qu'**au niveau de la sortie de trémie (6), la paroi arrière de trémie est formée par une deuxième roue (15) qui est disposée essentiellement parallèlement à la première roue (9) et est entraînée en rotation.

8. Dispositif selon la revendication 7, **caractérisé par le fait que** la première roue (9) et la deuxième roue (15) sont coaxiales.

9. Dispositif selon la revendication 7 ou 8, **caractérisé par le fait que** la deuxième roue (15) est entraînée en rotation dans le même sens de rotation que la première roue (9).

10. Dispositif selon une des revendications 7 à 9, **caractérisé par le fait que** la première roue (9) et la deuxième roue (15) sont entraînées à la même vitesse angulaire.

11. Dispositif selon une des revendications 7 à 10, **caractérisé par le fait que** la première roue (9) et la deuxième roue (15) sont disposées sur un arbre d'entraînement commun.

12. Dispositif selon une des revendications 7 à 11, **caractérisé par le fait que** la première roue (9) et la deuxième roue (15) forment un ensemble monobloc.

13. Dispositif selon une des revendications 7 à 12, **caractérisé par le fait que** la paroi arrière de trémie, dans le plan défini par la deuxième roue (15), comporte une plaque (18) avec une ouverture recevant la deuxième roue (15).

14. Dispositif selon la revendication 13, **caractérisé par le fait qu'**une règle (27) coulissante dans la direction longitudinale est disposée sur la plaque (18), sur la face de celle-ci tournée vers le récipient de stockage (4).

15. Dispositif selon une des revendications 1 à 14, **caractérisé par le fait que** la première roue (9) a une épaisseur qui permet l'aménagement dans la direction axiale de plusieurs cavités parallèles s'étendant dans la direction périphérique et **par le fait que** les canaux d'accumulation (7) voisins sont séparés par des cordons (19).

16. Dispositif selon une des revendications 1 à 14, **caractérisé par le fait que** l'unité de construction formée par le récipient de stockage (4), la trémie (5) avec la première roue (9) et le canal d'accumulation (7) est prévue en plusieurs exemplaires, dans un agencement en ligne.

17. Dispositif selon la revendication 16, **caractérisé par le fait que** dans l'agencement en ligne des unités de construction, la paroi avant de l'une des trémies (5) est formée par la paroi arrière de la trémie (5) voisine.

18. Dispositif selon la revendication 16, **caractérisé par le fait que** dans l'agencement en ligne des unités de construction, la paroi avant de trémie est formée par une paroi (20) fixe.

19. Dispositif selon une des revendications 1 à 18, **caractérisé par le fait que** la paroi latérale de trémie associée à la première roue (9) présente un support de paroi latérale (21) avec une découpe pour la première roue (9).

20. Dispositif selon la revendication 19, **caractérisé par le fait qu'**au moins le début du canal d'accumulation (7) est aménagé dans le support de paroi latérale (21).

21. Dispositif selon la revendication 20, **caractérisé par le fait que** le canal d'accumulation (7) divise le support de paroi latérale (21) en deux parties qui sont réglables l'une par rapport à l'autre pour adapter le canal d'accumulation (7) à la dimension des éléments individuels (13).

22. Dispositif selon la revendication 21, **caractérisé par le fait que** la partie du support de paroi latérale (21) comportant la découpe est rigide et l'autre partie du support de paroi latérale (21) est montée avec possibilité de réglage dans le plan défini par la première roue (9).

23. Dispositif selon une des revendications 1 à 22, **caractérisé par le fait qu'**une troisième roue (22) entraînée en rotation est disposée dans la sortie de trémie (6), en vis-à-vis de la première roue (9).

24. Dispositif selon la revendication 23, **caractérisé par le fait que** le sens de rotation de la troisième roue (22) correspond au sens de rotation de la première roue (9).

25. Dispositif selon la revendication 23 ou 24, **caractérisé par le fait que** le diamètre de la troisième roue (22) est inférieur d'au moins un facteur 5 au diamètre de la première roue (9).

26. Dispositif selon une des revendications 1 à 25, **caractérisé par le fait qu'**un orifice d'entrée (24) pour un écoulement de gaz, plus particulièrement un écoulement d'air dans le canal d'accumulation, est aménagé dans la sortie de trémie (6).

27. Dispositif selon une des revendications 1 à 26, **caractérisé par le fait qu'**une source de dépression est connectée au canal d'accumulation à l'extrémité de celui-ci éloignée de la sortie de trémie (6).

28. Dispositif selon une des revendications 1 à 27, **caractérisé par le fait que** la paroi latérale de trémie (25) en vis-à-vis de la première roue (9) est orientée verticalement.

29. Dispositif selon une des revendications 1 à 27, **caractérisé par le fait que** les deux parois latérales de trémie (8, 25) sont inclinées par rapport à la verticale.

30. Dispositif selon la revendication 29, **caractérisé par le fait que** les deux parois latérales de trémie (8, 25) forment entre elles un angle supérieur à 90°.

31. Dispositif selon la revendication 29 ou 30, **caractérisé par le fait que** la paroi latérale de trémie (25) en vis-à-vis de la première roue (9) la première roue (9), au niveau de la sortie de trémie (6), s'écarte de la première roue (9) en suivant un arc.

32. Dispositif selon la revendication 31, **caractérisé par le fait que** le point d'inversion de la courbure de la paroi latérale de trémie (25) en vis-à-vis de la première roue (9) est situé au-dessus de l'axe de la première roue (9).

33. Dispositif selon une des revendications 1 à 32, **caractérisé par le fait qu'**au dessus de la trémie (5), du côté tourné vers le récipient de stockage (4), sont disposées de règles (27) avec des orifices de passage qui sont disposées dans la direction longitudinale et forment le fond du récipient de stockage (4).

34. Dispositif selon une des revendications 1 à 33, **caractérisé par le fait que** le tracé aval du canal d'accumulation (7) suit la circonférence de la première roue (9).
